# EUROPEAN PATENT APPLICATION

(11) **EP 2 700 441 A1**
(43) Date of publication of application: **26.02.2014**
(21) Application number: 13194109.8
(22) Date of filing: 11.12.2006
(51) Int. Cl.: B01D 65/02, B01D 61/22

(54) **Reduced backwash volume process**

(30) Priority: 09.12.2005 AU 2005906945
(62) Divisional of application: 06817609.8
(71) Applicant: Siemens Industry, Inc., Alpharetta, GA 30005 (US)
(72) Inventor: Johnson, Warren Thomas, Grose Wold, New South Wales 2753 (AU)
(74) Representative: French, Clive Harry

(57) **Abstract**

A method of backwashing a membrane filtration module, wherein module includes one or more membranes located in a feed-containing vessel. The membranes having a permeable wall which is subjected to a filtration operation wherein feed liquid containing contaminant matter is applied to one side of the membrane wall and filtrate is withdrawn from the other side of the membrane wall. The method includes the steps of suspending the filtration operation; aerating the membrane surface with gas bubbles to dislodge fouling materials therefrom; recommencing the filtration operation while suspending the flow of feed liquid to the feed-contaiing vessel for a predetermined period; again suspending the filtration operation; performing a liquid backwash of the membrane wall to dislodge fouling materials therefrom; removing at least some of the liquid containing the dislodged contaminant matter from the feed-containing vessel; and then recommencing the filtration operation.

## Description

### TECHNICAL FIELD

This invention relates to membrane filtration processes, and, in particular, to the reduction of backwash volumes in such systems. More particularly, the invention may be applied to low-pressure membrane filtration processes such as micro-filtration and ultra-filtration systems.

### BACKGROUND OF THE INVENTION

Porous membrane filtration systems require regular backwashing of the membranes to maintain filtration efficiency and flux while reducing transmembrane pressure (TMP) which rises as the membrane pores become clogged with impurities. Such systems usually have a number of membranes in the form of bundles or arrays of membranes located in a feed tank. Feed is thus applied to the surfaces of the membranes and filtrate withdrawn from the membrane lumens. Typically, during the backwash cycle the impurities are forced out of the membrane pores by pressurised gas, liquid or both into the feed tank or cell. The liquid containing impurities and deposits from the membranes is then drained or flushed from the tank.

The waste liquid displaced from the tank needs to be disposed of or reprocessed, usually in an environmentally safe manner, so any reduction in the volume of such waste liquid is seen as advantageous in terms of environmental impact and cost.

The draining or flushing of the tank, particularly when large arrays of membranes are used also requires time, which results in down time of the filtration cycle. In order to reduce this down time large pumping systems are required to quickly drain and refill the tank. Where tanks or cells are arranged in banks and feed is used to refill the tank, a lowering in levels in other cells may be produced during the refill process. This again impinges on operating efficiency of the filtration system.

Many filtration systems also employ a gas bubble aeration method to assist in scouring unwanted deposits from the surfaces of the porous membranes during the cleaning stage. In order for such aeration to be effective the membranes must be fully immersed in liquid.

Typically, the cleaning process in such systems includes ceasing flow of feed liquid to the vessel in which the membranes are located, continuing the filtration process until the level of liquid in the tank reaches the top of the membranes, aerating the membranes with gas bubbles to scour impurities from the outer membrane surfaces for a period of time, then liquid backwashing the membrane pores. The tank is then drained or flushed to remove the waste liquid containing the impurities dislodged during the aeration and backwashing processes.

### DISCLOSURE OF THE INVENTION

According to one aspect, the present invention provides a method of backwashing a membrane filtration module, said module including one or more membranes located in a feed-containing vessel, the membranes having a permeable wall which is subjected to a filtration operation wherein feed liquid containing contaminant matter is applied to one side of the membrane wall and filtrate is withdrawn from the other side of the membrane wall, the method including:
a) suspending the filtration operation;
b) aerating the membrane surface with gas bubbles to dislodge fouling materials therefrom;
c) recommencing the filtration operation while suspending the flow of feed liquid to the feed-containing vessel for a predetermined period;
d) suspending the filtration operation;
e) performing a liquid backwash of the membrane wall to dislodge fouling materials therefrom;
f) removing at least some of the liquid containing the dislodged contaminant matter from the feed-containing vessel; and
g) recommencing the filtration operation.

Preferably, the removing step f) includes performing a sweep or drain down of the module or feed-containing vessel to remove the liquid containing the dislodged contaminant matter.

This invention uses the concept of reprocessing the waste from the aeration process onto the membrane at the end of a filtration cycle but includes a filtration step to dewater the waste liquid and then a liquid backwash step to flush the concentrated solids from the module.

According to another aspect, the present invention provides a method of backwashing a membrane filtration module, said module including one or more membranes located in a feed-containing vessel, the membranes having a permeable wall which is subjected to a filtration operation wherein feed liquid containing contaminant matter is applied to one side of the membrane wall and filtrate is withdrawn from the other side of the membrane wall, the method including:
a) suspending the filtration operation;
b) aerating the membrane surface with gas bubbles to dislodge fouling materials therefrom;
c) recommencing the filtration operation for a predetermined period;
d) suspending the filtration operation;
e) removing at least a portion of the liquid in the module or feed-containing vessel;
f) performing a liquid backwash of the membrane wall to dislodge fouling materials therefrom;
g) removing at least some of the liquid containing the dislodged contaminant matter from the feed-containing vessel; and
h) recommencing the filtration operation.

It will be appreciated that steps d) and e) may be reversed in order.

Preferably, the removing step g) includes performing a sweep or drain down of the module or feed-containing vessel to remove the liquid containing the dislodged contaminant matter.

According to another aspect, the present invention provides a method of backwashing a membrane filtration module, said module including one or more membranes located in a feed-containing vessel, the membranes having a permeable wall which is subjected to a filtration operation wherein feed liquid containing contaminant matter is applied to one side of the membrane wall and filtrate is withdrawn from the other side of the membrane wall, the method including:
a) suspending the provision of feed liquid to the feed containing vessel while continuing the filtration operation for a predetermined period;
b) suspending the filtration operation;
c) aerating the membrane surface with gas bubbles to dislodge fouling materials therefrom;
d) recommencing the filtration operation while continuing to suspend the flow of feed liquid to the feed-containing vessel for a further predetermined period;
e) suspending the filtration operation;
f) performing a liquid backwash of the membrane wall to dislodge fouling materials therefrom;
g) removing at least some of the liquid containing the dislodged contaminant matter from the feed-containing vessel; and
h) recommencing the filtration operation.

The process of the invention is adaptable to both pressurized and submerged non-pressurized filtration processes.

### BRIEF DESCRIPTION OF THE DRAWING

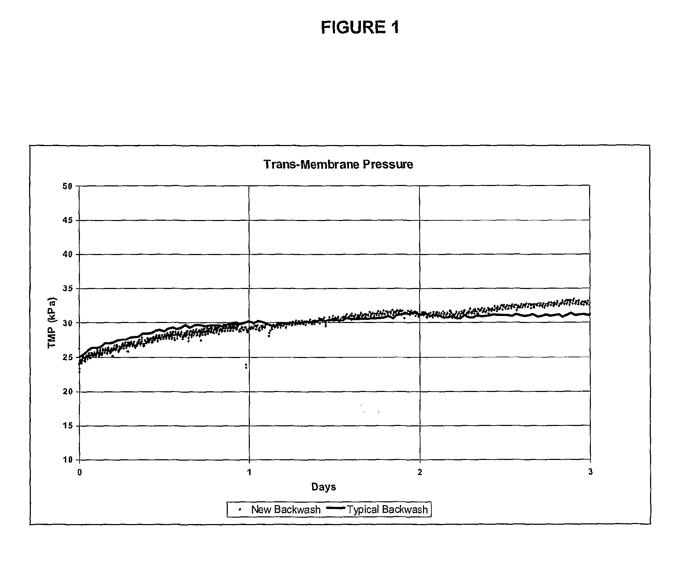

Figure 1 shows a graph of transmembrane pressure (TMP) variation over time for a typical backwash process and the reduced volume backwash process of one embodiment of the invention.

### DESCRIPTION OF PREFERRED EMBODIMENTS

Preferred embodiments of the invention will now be described, by way of example only.

In the preferred embodiments, the backwash is applied to membranes positioned in a feed tank. The membranes are typically mounted and extend from at least one header to form a membrane module with the module being positioned in the feed tank. The membranes have a permeable wall which is subjected to a filtration operation wherein feed containing contaminant matter is applied to one side of the membrane wall and filtrate is withdrawn from the other side of the membrane wall by the application of a pressure differential across the wall.

According to one preferred embodiment, the steps in the backwash process are as follows:
1. Filtration operation is suspended.
2. Gas bubble scour is conducted to scour solids from the membrane surface and transfer these into suspension in the liquid around the membranes.
3. Filtration operation is recommenced with no addition of feed liquid, so that the feed liquid level in the module housing or tank is dropped to a low level, and the liquid containing the suspended particles is filtered onto the membrane. This process may continue until all the liquid is filtered or just partially filtered.
4. A liquid backwash is then conducted in the reverse direction to the permeate flow so as to flush the loosely adhered solids from the membrane surface into the drained or partially drained tank or vessel.
5. The tank is then drained and refilled, and filtration is recommenced in the normal cycle.

The result of this preferred form of backwash process is a much more concentrated backwash stream with a proportionally lower volume. This reduces the cost of waste disposal and increases water recovery.

The filter-down step (step 3) may be conducted with constant filtration flow (increasing trans-membrane pressure (TMP) as the available membrane area is reduced) or modulated flow where the filtration flow is reduced as the level drops to maintain a constant or more manageable TMP.

The lower level to which liquid in the tank of vessel is reduced during the filter down step (3) can be varied depending on time and solids concentration. If filtering down continues to a level at the end of the exposed membrane area, the filtration flow must be reduced to keep the transmembrane pressure (TMP) at an acceptable level, and the time taken for the backwash process will be longer (greater backwash downtime), however, the solids concentration will be maximum and the backwash volume will be minimum. On the other hand, filtering down to a level, say half way down the membrane, can be done in a shorter time, but will result in a higher backwash volume and lower solids concentration in the backwash.

Additional variations of the basic process described in the above embodiment are possible, such as, returning to normal filtration with feed addition after step 2 for a defined period of time. The time period is selected to ensure that most of the solids scoured from the membrane surface during the aeration step are deposited on the membrane. The tank (or module housing) will then contain mostly feed liquid with the normal feed solids concentration. The feed liquid can then be drained from the module housing or tank and recovered as unprocessed feed liquid (by returning it to the feed tank or recycling to an adjacent cell etc.). Liquid backwash step 4 of the process can then be commenced with the removed solids being flushed into an empty (or partially empty) tank and normal filtration recommenced. This allows the filtration step or re-depositing the scoured solids onto the membrane surface, to occur at normal filtration flows or at least at higher flows than can be achieved with a full filter down step.

According to another embodiment of the invention, the steps of the backwash process are as follows:
1. Suspend the provision of feed liquid to the filtration system;
2. Continue filtration operation while feed liquid is suspended to reduce the liquid level on the feed side of the membranes to a predetermined level. The predetermined level is typically between 2/3 the height of the membranes to just below the top of the membrane potting.
3. Suspend the filtration process;
4. Gas bubble scour is conducted to scour solids from the membrane surface and transfer these into suspension in the liquid around the membranes.
3. Filtration operation is recommenced with no addition of feed liquid, so that the feed liquid level in the module housing or tank is dropped to a low level, and the liquid containing the suspended particles is filtered onto the membrane. This process may continue until all the liquid is filtered or just partially filtered.
4. A liquid backwash is then conducted in the reverse direction to the permeate flow so as to flush the loosely adhered solids from the membrane surface into the drained or partially drained tank or vessel.
5. The tank is then drained and refilled with feed liquid, and filtration is recommenced in the normal cycle.

The graph of Figure 1 shows the comparison between a typical backwash process and the reduced volume backwash process of the above embodiment. With the backwash process of this embodiment, the backwash liquid waste volume is reduced by at least of the order of 30% compared to that of a typical known membrane backwash process.

It will be appreciated that further embodiments and exemplifications of the invention are possible without departing from the spirit or scope of the invention described.

## Claims

1. A method of backwashing a membrane filtration module, said module including one or more membranes located in a feed-containing vessel, the membranes having a permeable wall which is subjected to a filtration operation wherein feed liquid containing contaminant matter is applied to one side of the membrane wall and filtrate is withdrawn from the other side of the membrane wall, the method including:
a) suspending the filtration operation;
b) aerating the membrane surface with gas bubbles to dislodge fouling materials therefrom;
c) recommencing the filtration operation for a predetermined period;
d) suspending the filtration operation;
e) removing at least a portion of the liquid in the module or feed-containing vessel;
f) performing a liquid backwash of the membrane wall to dislodge fouling materials therefrom;
g) removing at least some of the liquid containing the dislodged contaminant matter from the feed-containing vessel; and
h) recommencing the filtration operation.

2. A method according to claim 1 wherein step (c) is performed while suspending the flow of feed liquid to the feed-containing vessel.

3. A method according to claim 2 further comprising, prior to step (a), the step of:
- suspending the provision of feed liquid to the feed containing vessel while continuing the filtration operation for a predetermined period, and continuing to suspend the flow of feed liquid to the feed-containing vessel until step (c) is complete.

4. A method according to any preceding claim wherein the predetermined period of step (c) is determined by a required level of feed relative to said membranes.

5. A method according to any preceding claim wherein step (c) includes controlling the flow of filtrate from the system such that transmembrane pressure across said membrane wall remains below a predetermined value during said predetermined period.

6. A method according to claim 5 wherein the transmembrane pressure remain substantially constant.

7. A method according to any preceding claim wherein the removing step (g) includes performing a sweep or drain-down of the feed-containing vessel.

8. A method according to claim 1 wherein the removing step (e) includes performing a sweep or drain-down of the feed-containing vessel.

9. A method according to claim 1 or claim 8 wherein step (d) and the removing step (e) are reversed in order.
